(19)

Europäisches
Patentamt
European
Patent Office
Office européen
des brevets

(11)  **EP 2 957 390 A1**

(12)  # EUROPEAN PATENT APPLICATION

(43) Date of publication:
**23.12.2015  Bulletin 2015/52**

(51) Int Cl.:
**B25B 27/06** (2006.01)

(21) Application number: **15171719.6**

(22) Date of filing: **11.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **20.06.2014  IT TO20140497**

(71) Applicant: **Aktiebolaget SKF
415 50 Göteborg (SE)**

(72) Inventor: **Benedetto, Aldo
10060 Bibiana (TO) (IT)**

(74) Representative: **Tedeschini, Luca
SKF Industrie S.p.A.
Via Pinerolo, 44
10060 Airasca (TO) (IT)**

(54)  **TOOL FOR ASSEMBLING AN AXIAL ROLLING BEARING**

(57)  *A tool (20, 50) for assembling an axial rolling bearing (30), the bearing provided with a pair of radially outer rings (31, 32), a pair of radially inner rings (33, 34) and a double row of rolling bodies (35, 36), the tool (20, 50) being formed by two shells (21, 22), substantially semi-cylindrical shaped and alike each other, ap-proached along a correspondent diametrical plane (21', 22') and steadily fixed to each other thanks to an elastic means (23), and circumscribing the two radially outer rings (31, 32) of the bearing (30), in a way to ensure the radial alignment between the radially outer rings.*

Fig. 4

EP 2 957 390 A1

**Description**

Technical field

The present invention relates to a tool for assembling an axial rolling bearing. In particular, the bearing can be equipped with rolling elements of the type balls and be double-acting, in other words subject to axial loads in both directions. A typical but not exclusive application of such bearings is that on a spindle machine.

Background art

To the state of the art, rolling bearings used to transmit axial forces, in other words, force parallel to the axis of rotation of the bearing are already known. These bearings can be provided with rolling elements as balls or rollers. Axial bearings can be single or double-acting, that is to say, they transmit axial loads according to a single direction or in both directions of the axis of rotation. They are designed to allow only axial loads and, therefore, should not be subjected to radial loads. These bearings are separable, i.e. inner rings, outer rings and the group of balls and cage can be fitted separately .

The discussion that follows will refer, by way of example, to double-acting axial bearings, without thereby losing generality.

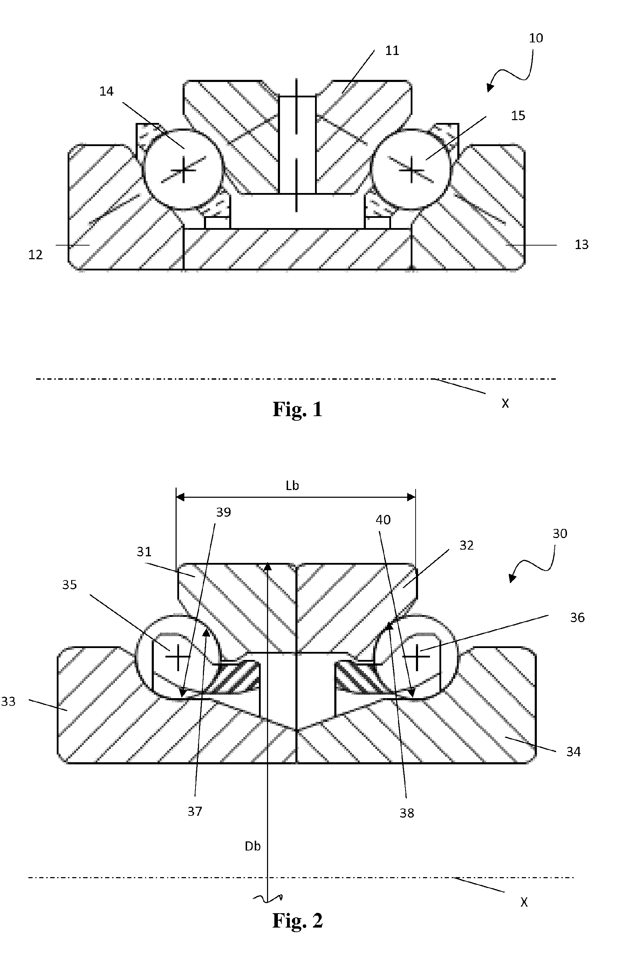

With reference to Fig. 1, these bearings 10 may include a radially outer ring 11, two radially inner rings 12, 13 and two crowns 14, 15 of rolling bodies, for example balls. A typical application of double-acting axial bearings is on spindle machines. Bearings for spindle machine are available with contact angle of 60° to ensure high stiffness, or with contact angle of 40° or 30° for higher speed applications. The axial bearings used on spindle machines can be realized in different ways. For example, with a single radially outer ring as shown in Fig. 1, or made with two separated radially outer rings, as shown in Fig. 2. In the latter case, the risk of misalignment between the two outer rings during the mounting on the spindle is quite high, as these bearings, not having to transmit radial loads, are coupled to the spindle with a radial clearance sufficiently wide and are so free to move in this direction.

Invention summary

Aim of the present invention is to realize a tool to be used during the assembling of a double-acting axial bearing on a spindle machine, the mounting tool being such as to ensure radial alignment between the two radially outer rings of the bearing or in any case to reduce the misalignment to a minimum, so as not to require subsequent corrective measures that on the one hand increase the risk of damage of the bearing and in any case increase the mounting time of the spindle.

Therefore, according to the present invention, a tool is disclosed, the tool being used during the assembling of a double-acting axial bearing on a spindle machine, the tool having the characteristics as in the enclosed independent claim.

Further embodiments of the invention, preferred and/or particularly advantageous, are described according to the characteristics as in the enclosed dependent claims.

Brief description of the drawings

The invention will be now described by reference to the enclosed drawings, which show some non-limitative embodiments, namely:

- Figure 1 is an axi-symmetrical section of an axial rolling bearing, having a single radially outer ring,
- Figure 2 is an axi-symmetrical section of an axial rolling bearing with twin radially outer rings, particularly suitable for the use of the tool according to the present invention,
- Figure 3 shows in section and in a front view the tool for assembling the axial bearing, according to a preferred embodiment of the present invention,
- Figure 4 is an axi-symmetrical section of the assembling of the tool on the axial bearing
- Figure 5 is a section of a second embodiment of the tool for assembling an axial bearing.

Detailed description

With reference to the above figures, a tool for assembling an axial bearing on a spindle machine, according a first embodiment of the invention, is referenced as a whole with 20.

The tool 20 is particularly suitable for the use with a bearing unit 30, shown in Fig. 2. Throughout the present description and in the claims, the terms and expressions indicating positions and orientations such as "radial" and "axial" are to be taken to refer to the axis of rotation x of the bearing unit 30.

The bearing unit 30 comprises a pair of radially outer rings 31, 32, a pair of radially inner rings 33, 34 and a double set of rolling bodies 35, 36, in this example spheres, interposed respectively between the outer ring 31 and the inner ring 33 and between the outer ring 32 and inner ring 34. This way of implementing the bearing with double outer rings is advantageous in facilitating the production process of said outer rings. In fact, the geometry of the outer ring makes more stable its grafting for performing machining precision turning on the piece already heat-treated.

The radially outer ring 31 defines internally a raceway 37 for the rolling bodies 35, while the radially outer ring 32 defines internally a raceway 38 for the rolling bodies 36. Similarly, the radially inner ring 33 defines externally a raceway 39 for the rolling bodies 35, while the radially inner ring 34 defines externally a raceway 40 for the rolling bodies 36.

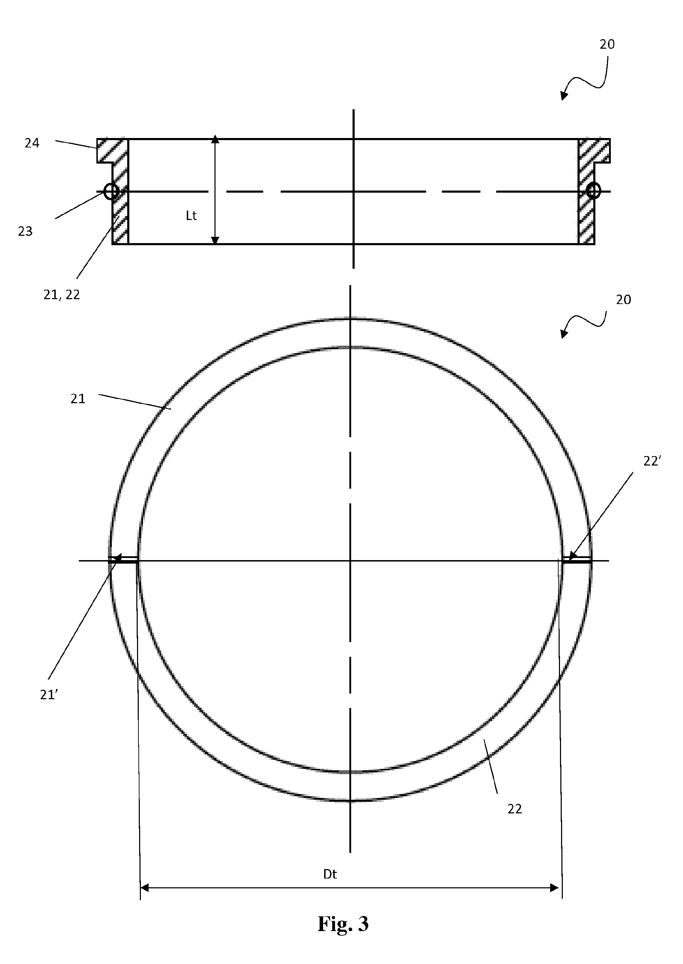

With reference to Figure 3, the tool 20 for mounting the axial bearing comprises two shells 21, 22, substantially semi-cylindrical shaped, preferably made of plastic. The two shells are equal to each other, can be pushed together along the respective diametral plane 21', 22' and held together by an elastic element 23, preferably an elastic ring of the O-ring type. Each of the two semi-cylindrical shells may be provided with a radially outer edge 24 which facilitates the manual grip during the mounting operation of the tool 20 on the axial bearing 30.

Advantageously, the radially inner diameter Dt of the shells 21, 22 should have a machining tolerance such as to allow always a coupling with a small clearance between tool and radially outer rings 31, 32 of the bearing 30. Such small clearance simplifies the installation. In other words, it will result:

$$Dt \geq Db$$

where Db is the diameter of the radially outer of the outer rings 31, 32 of the bearing 30. The radial clearance between tool and outer rings, i.e. the difference between the diameters Dt and Db, preferably, should not exceed 0.05 mm.

A further advantage is achieved if the axial length Lt of the tool 20 is not less than the length Lb, i.e. the sum of the axial lengths of the two radially outer rings 31, 32. In this way, the alignment of the two radially outer rings is improved. In other words, it will result:

$$Lt \geq Lb$$

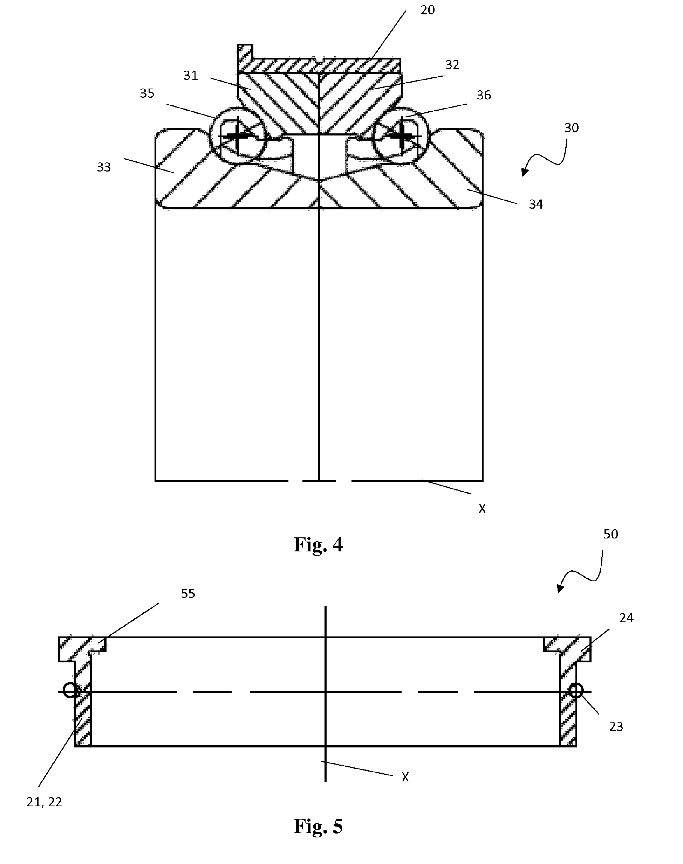

The use of the tool according to the invention will now be described with reference to Figure 4. First, the radially inner 34 is heated and is mounted in a radially outer position on the spindle machine (of known type and therefore not shown in the figure). Then, on the inner ring 34 the row 36 of rolling bodies and the radially outer ring 32 are positioned. Subsequently, mounts, axially approached to the radially outer ring 32, the second radially outer ring 31 and the row 35 of rolling bodies are mounted. At this moment, the tool 20 is inserted in a radially outer position with respect to outer rings 31, 32. The mounting of the tool is facilitated by the fact that the two shells 21, 22 can be slightly moved away from each other, by overcoming with a small manual force the resistance of the elastic element 23. Once inserted, the two shells of the tool are approached to each other, thanks to elastic return of the element 23. The position of the shells 21, 22 may possibly be adjusted with greater precision, always manually operating, so as to ensure the alignment of the outer rings 31, 32. To complete the assembly of the bearing 30, the second radially inner ring 34 is assembled and the bearing unit 30 is locked by means of suitable fasteners, for example screws. Then the tool 20 is removed and the usual check of squareness and concentricity of the bearing 30 is performed.

In Figure 5 is shown a second embodiment of the present invention, with the mounting tool identified as a whole by the reference 50. Compared to the previous embodiment, this embodiment differs for the presence in each of the shells 21, 22 of a radially inner edge 55. The purpose of this edge 55 is to improve the positioning of the shells 21, 22 around the radially outer rings 31, 32, so as to further reduce the misalignment between the two rings thereof. Additional aspects of this solution coincide with what has been described about the first embodiment. In particular, the two shells 21, 22 are held together by the elastic element 23, preferably an elastic ring of the O-ring type. Moreover, each of the two semi-cylindrical shells can be equipped with a radially outer edge 24 which facilitates the manual grip during the mounting operation of the tool 50 on the axial bearing 30.

Its use is particularly advantageous in the case, frequently in practice, in which the axial bearing is provided with two radially outer rings, that must be each other aligned with great accuracy. The assembly tool, according to the invention, minimizes misalignment between the outer rings of the bearing, so as not to require subsequent corrective actions that on the one hand increase the risk of damage of the bearing and in any case increase the installation time of the spindle.

Other than the embodiments of the invention, as above disclosed, it is to be understood that a vast number of variations exist. It should also be appreciated that the exemplary embodiment or exemplary embodiments are only examples and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

## Claims

1. A tool (20, 50) for assembling an axial rolling bearing (30), the bearing comprising a pair of radially outer rings (31, 32), provided with a predetermined radially outer diameter (Db) and a predetermined overall axial length (Lb), a pair of radially inner rings (33, 34) and a double row of rolling bodies (35, 36), respectively interposed between the radially outer ring (31) and the radially inner ring (33) and between the radially outer ring (32) and the radially inner ring (34), the tool (20, 50) comprising :

- two shells (21, 22), substantially semi-cylindrical shaped and alike each other, are approached along a correspondent diametrical plane (21', 22') e steadily fixed each other, thanks to an elastic means (23), and being **characterized in that**

- said shells (21, 22) radially and externally circumscribe the two radially outer rings (31, 32) of the bearing (30), being the radially inner diameter (Dt) of the shells (21, 22) greater or equal to the radially outer diameter (Db) of the radially outer rings (31, 32) of the bearing (30), in a way to ensure the radial alignment between said radially outer rings.

2. Tool (20, 50) according to claim 1, wherein the shells (21, 22) are made of plastic material.

3. Tool (20, 50) according to claim 1 or 2, **characterized in that** each shell (21, 22) is provided with a radially external edge (24), to make easier a manual grasp of the tool (20, 50).

4. Tool (20, 50) according to any of the preceding claims, wherein said elastic means (23) is an "O-ring".

5. Tool (20, 50) according to any of the preceding claims, **characterized in that** the difference between the radially inner diameter (Dt) of the shells (21, 22) and the radially outer diameter (Db) of the radially outer rings (31, 32) of the bearing (30) is smaller or equal to 0,05 mm.

6. Tool (20, 50) according to any of the preceding claims, **characterized in that** the axial length (Lt) of the tool (20, 50) is greater or equal to the overall axial length (Lb) of the two radially outer rings (31, 32).

7. Tool (50) according to any of the preceding claims, **characterized in that** each shell (21, 22) is provided with a radially internal edge (55).

**Fig. 1**

**Fig. 2**

**Fig. 3**

**Fig. 4**

**Fig. 5**

Europäisches
Patentamt

European
Patent Office

Office européen
des brevets

## EUROPEAN SEARCH REPORT

Application Number

EP 15 17 1719

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 195 862 B1 (CHANG WEN-LUNG [US]) 6 March 2001 (2001-03-06) * column 3, line 57 - line 64; figure 1 * * column 4, line 66 - column 5, line 3 * ----- | 1,3-6 | INV. B25B27/06 |
| X | US 2006/042062 A1 (TALLY KEVIN L [US]) 2 March 2006 (2006-03-02) * paragraphs [0025], [0027]; figures 1,2,7,11 * ----- | 1-3,5-7 | |
| A | DE 20 2013 004938 U1 (PASCHKE UWE [DE]) 17 July 2013 (2013-07-17) * paragraph [0061] - paragraph [0064]; claims 1-4; figures 1-4 * ----- | 1 | |
| A | US 4 473 933 A (RENK MARTIN J [US]) 2 October 1984 (1984-10-02) * column 1, line 39 - line 47; figures * ----- | 1 | |
| A | US 4 167 057 A (TRAYNOR CRAIG D) 11 September 1979 (1979-09-11) * abstract; figure 1 * ----- | 1 | TECHNICAL FIELDS SEARCHED (IPC) |
| A | DE 203 13 682 U1 (PASCHKE UWE [DE]) 13 November 2003 (2003-11-13) * page 3, line 7 - line 22; figures 1,2 * ----- | 1 | B25B |

The present search report has been drawn up for all claims

| Place of search | Date of completion of the search | Examiner |
|---|---|---|
| The Hague | 9 October 2015 | Pothmann, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 1719

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2015

| Patent document cited in search report | | Publication date | Patent family member(s) | Publication date |
|---|---|---|---|---|
| US 6195862 | B1 | 06-03-2001 | NONE | |
| US 2006042062 | A1 | 02-03-2006 | NONE | |
| DE 202013004938 | U1 | 17-07-2013 | NONE | |
| US 4473933 | A | 02-10-1984 | NONE | |
| US 4167057 | A | 11-09-1979 | NONE | |
| DE 20313682 | U1 | 13-11-2003 | NONE | |

EPO FORM P0459

For more details about this annex : see Official Journal of the European Patent Office, No. 12/82